# EUROPEAN PATENT SPECIFICATION

(11) **EP 1 044 096 B1**
(45) Date of publication and mention of the grant of the patent: **20.10.2004**
(21) Application number: 99940288.6
(22) Date of filing: 06.08.1999
(51) Int. Cl.: B29C 51/14, B29C 51/08

(54) **THE FORMATION OF INDICIA IN THE BASE OF A BLISTER PACK FOR TRANSFERENCE TO A BODY CAST THEREIN**
HERSTELLUNG EINER MARKIERUNG IN DEM BODEN EINER BLISTERVERPACKUNG WOBEI DIE BLISTERVERPACKUNG DANN ALS GIESSWERKZEUG VERWENDET WIRD
FORMATION DE REPERES DANS LA BASE D'UN EMBALLAGE-COQUE EN VUE D'UNE MIGRATION VERS UN CORPS QUI Y A ETE COULE

(30) Priority: 14.08.1998 GB 9817793
(43) Date of publication of application: 18.10.2000
(73) Proprietor: Cardinal Health 409, Inc., Basking Ridge, New Jersey 07920 (US)
(72) Inventor: HEATH, Kenneth, The Gables, Bryn, Llanelli, Carmarthenshire SA14 9RR (GB)
(74) Representative: Weyland, J.J. Pierre
(86) International application number: PCT/GB1999/002589
(87) International publication number: WO 2000/009313

(56) References cited:
- EP-A- 0 563 934
- EP-A- 0 646 367
- EP-A- 0 905 042
- WO-A-97/21534
- US-A- 5 457 895

## Description

This invention relates to a method of forming a laminated film according to the preamble of claim 1 to form blister packs in the blisters of which bodies are cast as well as an apparatus therefore. Such blister packs typically comprise polymeric films in which the blisters are heat formed. The present invention is particularly concerned with the use of laminated films in which a metal foil is sandwiched between two polymeric layers.

Blister films are particularly suited for the casting of frangible bodies which comprise some pharmaceuticals. These bodies are commonly made using lyophilisation or freeze-drying processes, but alternative techniques such as those including a solid state dissolution stage are also used. The liquid material of the body is poured into the blister or blisters, and then subjected to various treatments while still in the blisters. The products remain in the blister until they are ready for use and at this stage they are readily extractable.

Polymeric blister films suffer from the disadvantage of being permeable, with the consequence that however well the individual blisters are sealed, there is always a potential storage problem if the contents of the blister must be protected from the surrounding atmosphere. With the above points in mind, laminated blister films have been developed in which a metal foil is sandwiched between polymeric films on either side. Such films are less permeable than all-polymeric films, but some known films can become distorted when subjected to heat treatments, generating irregularity in the cast products and making subsequent handling of the blister pack more difficult. Although some laminated films have been developed which are more stable under heat treatment; see our published European Patent Specification Nos. 0 646 367 and 0 710 101, generally these laminated films are not suitable for the hot-forming of blisters therein. The metal foil core, normally of aluminium, is much better suited to cold forming.

There is currently a strong demand for products cast in blister films as described above to bear some indelible marking. To meet this demand, a hot formed blister can readily be adapted to bear indicia on its internal surface, which indicia are then reflected in the respective surface of the cast product.

US-A-5457895 being the base of the preamble of claim 1 discloses a method of applying an identifying mark to a dosage form, which includes the step of forming a blister pocket bearing an identifying embossment. A precise indication as to how the embossment is created in the base part of the blister is not given, however.

WO97/21534, document under Article 54(3)EPC, discloses a process for making cold-formed packages with at least one recess of a metal-plastic composite. It does not disclose a process for making an embossed blister.

In view of the prior art, the technical problem to be solved by the person skilled in the art is how to provide a blister comprising a metal-plastic laminate with an identifying mark in a cold-forming process in an efficient manner.

This problem is solved according to the features of independent claims I and 7. Further embodiments of the invention are defined in the dependent claims.

In our International Patent Application filed today with priority from British Application Nos. 9717491.6 and 9718382.6, we have addressed the difficulties of creating indicia on the base of a blister formed with a laminated foil of the kind to which this invention relates simultaneously with the formation of the blister itself. In that Application, the problem is met by creating the indicia in the second stage of the two stage process in the first of which the blister itself is formed. According to the present invention, these two stages are accomplished in the single pass of the blister forming punch or pin by effectively controlling the manner in which the laminated film is stretched to form the blister. According to the invention, the blister is cold formed by advancing a pin in a direction transversely relative to the plane of the film towards and into engagement with a platen bearing an indicia-forming dye thereon. The end face of the pin is formed with a mould for the indicia complementary to the dye, and the movement of the pin towards the platen draws and stretches film predominantly from around the blister, thereby minimising stretching of the film at the base of the blister. As a consequence, the film at the base of the blister requires less recovery time before it is again stretched to form the indicia, which can thus be accomplished at the end of the single pass of the punch or pin.

In order to ensure that during the initial movement of the pin the film is stretched from around the blister rather than from the base thereof, a slightly greater frictional contact between the periphery of the end face of the pin and the laminated film is created. To some extent, this is accomplished by the formation of the mould in the pin end face, if around the mould the end face is substantially flat. However, the effect can be enhanced by forming the end face of the pin around the mould slightly concave whereby a peripheral edge is created which provides some additional grip.

The profile of the pin itself will of course also significantly influence the manner in which the film is stretched as the pin advances towards the platen. We have found that two or more contiguous frusto-conical sections are suitable, with the apex angle of the frusto-conical cone adjacent the end face being substantially 60°, and the apex angle of the frusto-conical section contiguous thereto being around 30°.

Another means by which the desired differential stretching of the film as the blister is formed can be achieved is by using a different material for the end face of the pin from that used for the flanks. Preferred materials for the punch or pin in methods of the invention are stainless steel or polytetrofluethylene (PTFE). When this variant is adopted, the punch or pin is formed in stainless steel which also forms the end face, with the flanks of the pin being coated with PTFE.

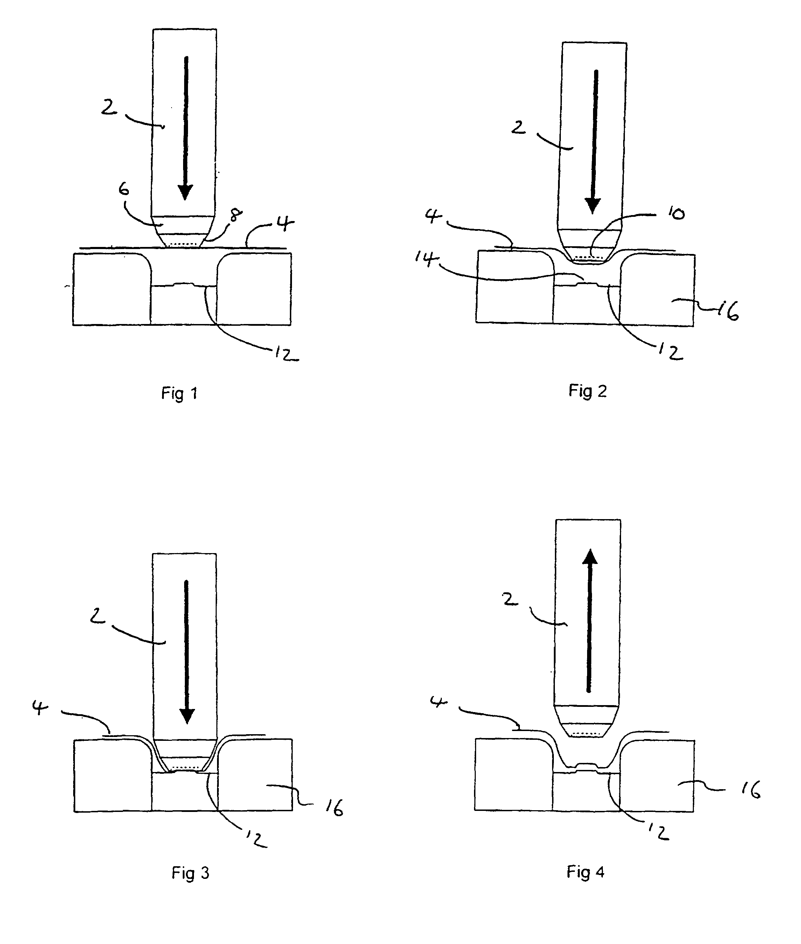

An embodiment of the invention will now be described by way of example and with reference to the accompanying drawings in which Figures 1 to 4 show the progressive stages in the formation of a blister in a laminated film of the kind to which the invention relates.

In Figure 1, a punch or pin 2 is shown over a laminated film 4 of the kind described in our published European Patent Specification Nos. 0646367 and 0710101, which film 4 comprises a metal foil with a polymeric layer on either side thereof. Towards the lower end of the pin 2 as shown, there are two contiguous frusto-conical flanks 6 and 8 leaning towards an end face 10 in which is formed the mould for indicia to be created in the base of the eventual blister.

The film 4 is clamped in known manner, and as shown in Figure 2 the pin 2 advances thereagainst towards a platen 12 bearing an indicia forming dye thereon. During the initial stage shown in Figure 2 the stretching is relatively uniform, but the periphery of the end face 10 is of course making contact with the film 4 under progressively greater pressure. Thus, as the punch advances to its final position shown in Figure 3, the stretching at the base of the blister being formed is minimised, with film being stretched from the areas around the blister. As a consequence, indicia may be formed in the base of the blister as the blister is itself created, during the final movement of the punctual pin against the platen 12. This is typically within the last millimetre of movement of the punch or pin, normally within the last 0.3 to 0.5 millimetres thereof. Typical indicia will normally have a depth within these ranges.

Figure 4 shows the punch or pin 2 being withdrawn, and illustrates the resilient response of the laminated film which arises from the platen 12. It will be noted that the platen 12 and the surrounding base 16 which define the recess in which the blister is created do not themselves form a mould against which the laminated film is urged. The punch or pin 2 determines the entire shape of the blister itself, only the indicia are formed positively from both sides.

It should be understood that the invention applies to the application of indicia to be reflected in the respective surface of the cast product in the broadest sense of the term. Thus, any form of marking is included, and particularly marking having a purely functional purpose such as the creation of break lines. Break lines are commonly used on tablets for oral administration where there is an occasional need for only a portion of a tablet to be taken at a particular time. The invention thus has particular value in the formation in a face of a product cast in a blister pack of indicia or marking which takes the form of or includes a break line. In this respect it will be appreciated that a break line can be effectively formed by a sequence of depressions or grooves; it does not have to be a continuous groove in all circumstances. What is important is that a line of weakness is formed which enables the cast product to be easily broken into two or more pieces as defined by the break line or lines.

## Claims

1. A method of forming a laminated film (4) comprising a metal foil and a polymeric layer on either side of the foil with at least one blister the base of which bears projecting indicia for moulding into a body cast therein, which method comprises cold-forming the blister by advancing a pin (2) in a direction transversely relative to the plane of the film (4) towards and into engagement with a platen (12) bearing an indicia-forming die (14) thereon, the end face (10) of the pin (2) being formed with a mould for the indicia complementary to the die (14), wherein a greater frictional contact is established between the periphery of the end face (10) of the pin (2) and the laminated film (4), such that said advancing movement of the pin (2) stretches the film (4) predominantly from around the blister thereby minimizing stretching of the film (4) located at the base of the blister,
**characterized in that** the indicia are created simultaneously with the blister itself in the single pass of the blister-forming pin (2).

2. A method according to claim 1 wherein the end face (10) of the pin (2) around the mould is formed concave whereby a peripheral edge is created.

3. A method according to claim 1 or 2 wherein the pin (2) is adapted to progressively engage the film (4) and comprises at least two contiguous frusto-conical portions (6, 8) adjacent to the pin end face (10).

4. A method according to any preceding claim wherein the end face (10) of the pin (2) and the flanks of the pin (2) are made of a different material.

5. A method according to any preceding claim wherein the metal foil is composed of aluminum.

6. A method according to any preceding claim wherein the platen (12) bearing the indicia-forming die (14) is located in a base (16) which is not configured to form a mould against which the laminated film (4) is contoured.

7. An apparatus for forming a laminated film (4) according to the method of claims 1 to 6 comprising a metal foil and a polymeric layer on either side of the foil with at least one blister the base of which bears projecting indicia for moulding into a body cast therein, comprising:
a) a pin (2) having a body portion and a face portion, said face portion being provided with a mould for the indicia;
b) a platen (12) bearing an indicia-forming die (14) thereon and adapted to accommodate a laminated film (4) thereon, said platen (12) being provided on a base (16) which is not configured to form a mould against which the laminated film (4) is contoured; and
c) means for advancing said pin (2) towards and into engagement with said platen (12);
wherein said mould for the indicia on the pin (2) and said indicia-forming die (14) on the platen (12) are complementary and said pin (2) is positioned transversally to said platen (12),
wherein said pin body provides for a greater frictional contact between the periphery of the end face (10) of the pin (2) and the laminated film (4), such that an advancing movement of the pin (2) stretches the film (4) predominantly from around the blister thereby minimizing stretching of the film (4) located at the base of the blister, such that the indicia may be created simultaneously with the blister itself in the single pass of the blister-forming pin (2).

8. An apparatus according to claim 7, wherein the end face (10) of the pin (2) around the mould is formed concave whereby a peripheral edge is created.

9. An apparatus according to claim 7 or claim 8, wherein the pin body is adapted to progressively engage the film (4) and comprises at least two contiguous frusto-conical portions (6, 8) adjacent to the pin end face (10).

10. An apparatus according to any one of claims 7 to 9, wherein the end face (10) of the pin (2) and the flanks of the pin (2) are made of a different material.

## Patentansprüche

1. Verfahren zum Formen eines laminierten Films (4), welcher eine Metallfolie umfasst sowie eine polymere Schicht auf einer jeden der beiden Seiten der Folie, mit mindestens einem Blister, dessen Boden eine vorspringende Markierung zum Formen in einen darin gegossenen Körper aufweist, wobei das Verfahren ein Kaltformen des Blisters durch ein Vorwärtsbewegen eines Stiftes (2) in einer relativ zu der Ebene des Films (4) transversal verlaufenden Richtung, in die Richtung und in den Eingriff mit einer Platte (12), welche einen jene Markierung herstellenden Prägestempel (14) auf derselben trägt, umfasst, wobei die Endfläche (10) des Stiftes (2) mit einer Form für die Markierung ausgestattet wird, welche komplementär zu dem Prägestempel (14) ist, wobei ein größerer Reibungskontakt zwischen der Peripherie der Endfläche (10) des Stiftes (2) und dem laminierten Film (4) aufgebaut wird, derart dass jene Vorwärtsbewegung des Stiftes (2) dem Film (4) vorwiegend ausgehend von der Umgebung des Blisters her eine Dehnung auferlegt, wodurch die Dehnung des sich an dem Boden des Blisters befindlichen Films (4) auf ein Minimum reduziert wird,
**dadurch gekennzeichnet, dass** die Markierung gleichzeitig mit dem Blister selbst in einem einzigen Durchgang des den Blister formenden Stiftes (2) erzeugt wird.

2. Verfahren gemäß Anspruch 1, bei welchem die Endfläche (10) des Stiftes (2) um die Form herum konkav geformt ist, wodurch eine Kante an der Peripherie geschaffen wird.

3. Verfahren gemäß den Ansprüchen 1 oder 2, bei welchem der Stift (2) so angepasst ist, dass er zunehmend mit dem Film (4) in Eingriff kommt, und dass derselbe mindestens zwei aneinander angrenzende, kegelstumpfartige Teile (6, 8) umfasst, welche in der Nachbarschaft der Endfläche (10) des Stiftes liegen.

4. Verfahren gemäß irgendeinem der vorhergehenden Ansprüche, bei welchem die Endfläche (10) des Stiftes (2) und die Flanken des Stiftes (2) aus einem unterschiedlichen Material hergestellt sind.

5. Verfahren gemäß irgendeinem der vorhergehenden Ansprüche, bei welchem die Metallfolie aus Aluminium besteht.

6. Verfahren gemäß irgendeinem der vorhergehenden Ansprüche, bei welchem die Platte (12), welche den eine Markierung herstellenden Prägestempel (14) trägt, in einer Basis (16) angeordnet ist, welche nicht so konfiguriert ist, um eine Form zu bilden, gegen welche dem laminierten Film (4) eine äußere Gestalt verliehen wird.

7. Vorrichtung zum Formen eines laminierten Films (4) gemäß dem Verfahren nach den Ansprüchen 1 bis 6, welche eine Metallfolie umfasst sowie eine polymere Schicht auf einer jeden der beiden Seiten der Folie, mit mindestens einem Blister, dessen Boden eine vorspringende Markierung zum Formen in einen darin gegossenen Körper aufweist, wobei die Vorrichtung umfasst:
a) einen Stift (2) mit einem Körperteil und mit einem Frontteil, wobei jener Frontteil mit einer Form für die Markierung ausgestattet ist;
b) eine Platte (12), welche einen die Markierung herstellenden Prägestempel (14) auf derselben trägt und welche so ausgelegt ist, dass ein laminierter Film (4) auf derselben angepasst werden kann, wobei die Platte (12) in einer Basis (16) vorgesehen ist, welche nicht so konfiguriert ist, um eine Form zu bilden, gegen welche dem laminierten Film (4) eine äußere Gestalt verliehen wird; und
c) Hilfsmittel zur Vorwärtsbewegung des Stiftes (2) in die Richtung und in den Eingriff mit der Platte (12);
wobei jene Form für die Markierung an dem Stift (2) und jener die Markierung herstellende Prägestempel (14) an der Platte (12) komplementär zueinander sind und wobei der Stift (2) transversal in Bezug auf die Platte (12) angeordnet ist;
wobei jener Stiftkörper einen größeren Reibungskontakt zwischen der Peripherie der Endfläche (10) des Stiftes (2) und dem laminierten Film (4) liefert, derart dass eine Vorwärtsbewegung des Stiftes (2) dem Film (4) vorwiegend ausgehend von der Umgebung des Blisters her eine Dehnung auferlegt, wodurch die Dehnung des sich an dem Boden des Blisters befindlichen Films (4) auf ein Minimum reduziert wird, so dass die Markierung gleichzeitig mit dem Blister selbst in einem einzigen Durchgang des den Blister formenden Stiftes (2) erzeugt wird.

8. Vorrichtung gemäß Anspruch 7, bei welcher die Endfläche (10) des Stiftes (2) um die Form herum konkav geformt ist, wodurch eine Kante an der Peripherie geschaffen wird.

9. Vorrichtung gemäß Anspruch 7 oder Anspruch 8, bei welcher der Stiftkörper so angepasst ist, dass er zunehmend mit dem Film (4) in Eingriff kommt, und dass derselbe mindestens zwei aneinander angrenzende, kegelstumpfartige Teile (6, 8) umfasst, welche in der Nachbarschaft der Endfläche (10) des Stiftes liegen.

10. Vorrichtung gemäß irgendeinem der Ansprüche 7 bis 9, bei welcher die Endfläche (10) des Stiftes (2) und die Flanken des Stiftes (2) aus einem unterschiedlichen Material hergestellt sind.

## Revendications

1. Procédé de formage d'un film laminé (4) comprenant une feuille de métal et une couche polymère sur les deux faces de la feuille avec au moins une coque dont la base porte des indices saillants pour un moulage dans un corps coulé à l'intérieur, lequel procédé comprend le formage à froid de la coque en faisant avancer une pointe (2) dans une direction transversalement par rapport au plan du film (4) vers et en prise avec un plateau (12) portant un outil de frappe formant des repères (14) sur celui-ci, la face d'extrémité (10) de la pointe (2) étant formée avec un moule pour les repères complémentaire à l'outil de frappe (14), dans lequel un contact de frottement plus grand est établi entre la périphérie de la face d'extrémité (10) de la pointe (2) et le film laminé (4), de sorte que le mouvement d'avancement de la pointe (2) étire le film (4) en prédominance autour de la coque, minimisant ainsi l'étirement du film (4) situé à la base de la coque,
**caractérisé en ce que** les repères sont créés simultanément avec la coque elle-même pendant le passage unique de la pointe formant la coque (2).

2. Procédé suivant la revendication 1, dans lequel la face d'extrémité (10) de la pointe (2) autour du moule est formée concave, en conséquence de quoi un bord périphérique est créé.

3. Procédé suivant la revendication 1 ou 2, dans lequel la pointe (2) est adaptée pour engager progressivement le film (4) et comprend au moins deux portions frusto-coniques contiguës (6, 8) adjacentes à la face d'extrémité de la pointe (10).

4. Procédé suivant l'une quelconque des revendications précédentes, dans lequel la face d'extrémité (10) de la pointe (2) et les flancs de la pointe (2) sont faits d'un matériau différent.

5. Procédé suivant l'une quelconque des revendications précédentes, dans lequel la feuille de métal est composée d'aluminium.

6. Procédé suivant l'une quelconque des revendications précédentes, dans lequel le plateau (12) portant l'outil de frappe formant des repères (14) est situé dans une base (16) qui n'est pas configurée pour former un moule contre lequel le film laminé (4) est profilé.

7. Appareil de formage d'un film laminé (4) selon le procédé suivant les revendications 1 à 6, comprenant une feuille de métal et une couche polymère sur les deux faces de la feuille, avec au moins une coque dont la base porte des repères saillants pour un moulage dans un corps coulé à l'intérieur, comprenant:
a) une pointe (2) possédant une portion de corps et une portion de face, ladite portion de face étant pourvue d'un moule pour les repères;
b) un plateau (12) portant un outil de frappe formant des repères (14) sur celui-ci et adapté pour recevoir un film laminé (4) sur celui-ci, ledit plateau (12) étant disposé sur une base (16) qui n'est pas configurée pour former un moule contre lequel le film laminé (4) est profilé; et
c) un moyen pour faire avancer ladite pointe (2) vers et en prise avec ledit plateau (12);
dans lequel ledit moule pour les repères sur la pointe (2) et ledit outil de frappe formant des repères (14) sur le plateau (12) sont complémentaires et ladite pointe (2) est positionnée transversalement audit plateau (12),
dans lequel ledit corps de pointe offre un contact de frottement plus grand entre la périphérie de la face d'extrémité (10) de la pointe (2) et le film laminé (4), de sorte qu'un mouvement d'avancement de la pointe (2) étire le film (4) en prédominance autour de la coque, minimisant ainsi l'étirement du film (4) situé à la base de la coque, de sorte que les repères peuvent être créés simultanément avec la coque elle-même pendant le passage unique de la pointe formant la coque (2).

8. Appareil suivant la revendication 7, dans lequel la face d'extrémité (10) de la pointe (2) autour du moule est formée concave, en conséquence de quoi un bord périphérique est créé.

9. Appareil suivant la revendication 7 ou la revendication 8, dans lequel le corps de la pointe est adapté pour engager progressivement le film (4) et comprend au moins deux portions frusto-coniques contiguës (6, 8) adjacentes à la face d'extrémité de la pointe (10).

10. Appareil suivant l'une quelconque des revendications 7 à 9, dans lequel la face d'extrémité (10) de la pointe (2) et les flancs de la pointe (2) sont faits d'un matériau différent.
